Europäisches Patentamt

European Patent Office

Office européen des brevets

(11) Publication number: **0 254 538**
**A1**

# EUROPEAN PATENT APPLICATION

(21) Application number: **87306449.7**

(22) Date of filing: **21.07.87**

(51) Int. Cl.⁴: **G 21 F 9/32**

(30) Priority: **22.07.86 US 888661**

(43) Date of publication of application:
**27.01.88 Bulletin 88/04**

(84) Designated Contracting States:
**DE ES FR GB IT SE**

(71) Applicant: **WESTINGHOUSE ELECTRIC CORPORATION**
**Westinghouse Building Gateway Center**
**Pittsburgh Pennsylvania 15222 (US)**

(72) Inventor: **Saha, Anuj Kumar**
**4878 Winterway**
**Hamburg, NY 14075 (US)**

(74) Representative: **van Berlyn, Ronald Gilbert**
**23, Centre Heights**
**London, NW3 6JG (GB)**

(54) Method for dry clean-up of waste material.

(57) Method for dry clean-up of waste material containing one or more of Cl, S or N, first heats the waste in a fixed-bed incinerator at a temperature of from 730°C to 875°C to provide dry ash and gas; then heats the gas in an afterburner to provide a combusted effluent gas containing acidic gas components and particulate ash; and then passes the effluent gas to a filter to collect dry ash; and finally passes filtered effluent gas to a neutralization means containing dry alkaline material to neutralize acidic gases in the effluent gas, after which the gas is vented and the dry ash collected.

EP 0 254 538 A1

## Description

## METHOD FOR DRY CLEAN-UP OF WASTE MATERIAL

This invention relates to a method for dry clean-up of waste material.

Removal of acidic volatiles from incinerated, commercial, trash flue gas, and in particular, safe incineration of polyvinyl chloride, and radioactive waste materials, such as ion exchange resins containing radioactive ions, has become a problem of increasing concern.

Ion-exchange resins are conventionally used in various nuclear reactor systems for removing mineral, metallic, and other impurities from water circulated through a reactor and its associated components. When spent, these ion-exchange resins are usually not regenerated, but are disposed of as radioactive waste. These resins can be centrifuged to remove water and form a radioactive cake, or they can be mixed with cement and vermiculite to encapsulate the resin in solidified concrete. These methods, however, result in large volumes of contaminated materials. One method to reduce the volume of contaminated materials is thermal reduction at over 1000°C. Such processing, however, can produce flue gases with acidic volatiles, and cause excess amounts of radioactive volatile formation, such as ruthenium tetroxide, $RuO_4$, and the like. Further extensive processing of these flue gases would be required to solve such problems.

U.S. Patent Specification No. 3,418,788 (Sugimoto), discloses attempted mechanical and electrical filtering to concentrate radioactive waste material after incineration. U.S. Patent Specification No. 3,922,974 (Hempelmann), similarly discloses attempted incineration coupled with a variety of banks of coarse and fine filters with after-burning apparatus. While reducing radioactive waste volume, these prior methods did little to address problems of acidic volatiles and radioactive volatile formation.

U.S. Patent Specification No. 4,053,432 (Tiepel et al.), discloses fluid-bed incineration of pre-dried radioactive waste, first in a reducing atmosphere containing a inert/non-oxygenated/limited-free-oxygen containing gas at about 500°C, and then in a limited amount of oxygen at less than 700°C. Volatiles produced were further reacted in an afterburner in an excess of oxygen, where the oxygen reacted with hydrocarbons to form carbon dioxide and water. The reacted flue gas was then wet cooled to about 100°C by an evaporative water or alkaline liquid scrub solution. This step also removes most of the incoming particulates, but requires eventual disposal of the scrub solution. The cooled gas was then passed through a single absorber to remove any gases not removed during scrub-cooling, such as sulfur dioxide, nitric oxides, or radioactive volatile species. Finally, the gas was passed through a fine filter and vented. Total volume reduction was from 20 volume of waste to 1 volume of ash. This process takes as long as 6 hours per batch, requires pre-drying of waste and expensive fluid-bed pyrolyser/incinerators, and produces liquid waste.

U.S. Patent Specifciation No. 4,088,737 (Thomas et al.), is concerned with removal of radioactive iodine from a waste gas stream associated with reprocessing of irradiated nuclear reactor fuel elements and passes the gas through a silver-exchange zeolite. Hydrogen was then passed through the zeolite to desorb iodine, forming hydrogen iodide, which was passed to a lead-exchanged zeolite.

U.S. Patent Specification No. 4,145,396 (Grantham) takes a different approach in disposing of organic waste associated with processing of fuels for nuclear reactors, where such waste was made up of combustible materials such as paper, polyethylene and polyvinyl chloride plastics, rubber, and a small proportion of radioactive elements such as strontium, cesium, iodine and ruthenium. There, the organic waste along with oxygen was introduced into an alkali metal carbonate salt bath, maintained at from 400°C to 1000°C, to produce solid combustion products, and effluent gas containing water vapor and carbon dioxide. The gas was passed through a series of filters to remove particulates greater than 0.2 micron, and then vented to the atmosphere. Such a process is necessarily complicated and expensive, and requires contaminated molten salt disposal. What is needed is a simple, fast, less expensive method of further reducing the volume of wastes generally, and particularly polyvinyl chloride and spent radioactive ion exchange resin wastes, while reducing acidic and radioactive gas emission problems.

Accordingly, the present invention resides in a process for dry clean-up of waste material, characterized by: supplying waste material containing at least one of halogen, S and N, to a fixed-bed heater; heating the waste material in an oxidizing atmosphere at a temperature from 730°C to 875°C, to thermally decompose the material and provide dry ash and gas; combusting the gas to provide an effluent gas containing an acidic gas; passing the effluent gas through dry alkaline material in a neutralization means, to neutralize the acidic gas; and venting the neutralized effluent gas and collecting the dry ash. There has thus been provided a a process, including dry neutralization, for waste material, particularly waste containing both polyvinyl chloride or other halogen containing synthetic plastics material and radioactive ruthenium and iodine contaminated ion-exchange resins. The process preferably includes heating the waste in an oxidizing atmosphere, to produce dry ash residue and effluent gas; combusting the effluent gas to provide a combusted gas containing acidic gas, radio isotopes and particulate ash; hot gas filtration to produce dry ash residue; dry neutralization of halogen, nitrogen and sulfur gaseous species; preferably, separate adsorption to partition isotopes; final particulate filtration; and venting. Air cooling may be used between filtration steps and between the dry neutralization and the adsorption steps. No wet scrubbing is used and no liquid waste is produced, so that there is no need to immobilize or solidify liquid residue with the result that the volume-reduction factor of wastes is enhanced considerably. A heat recovery system can also be installed between the heating means and the neutralization means, which recovered heat can be used for a variety of purposes.

In more detail, the method preferably includes a first stage heating incinerator, where air is the oxidant and where the temperature is maintained at from 730°C to 875°C. Excess air is fed into the effluent gas from the first stage incinerator to provide additional combustion and volatilization of uncombusted hydrocarbons in a second stage heating afterburner, which is maintained over 875°C, and preferably at from 980°C to 1150°C. The effluent gas, containing one or several of particulate ash, iodine vapor, ruthenium vapor, hydrogen chloride acid gas, nitrogen oxide acid gas and sulfur oxide acid gas, at about 1100°C, is passed to appropriate hot gas filters, such as those using silicon carbide and/or sintered metal filters, to remove dry particulate ash having diameters greater than about 1 micron. Preferably two filters are used with cooling air being fed into the effluent gas stream between the filters. The cooled, filtered effluent stream is then passed through a dry neutralization bed containing a dry, basic material, to neutralize acid gases in the effluent and remove some radioactive iodine.

The neutralized effluent gas is then preferably passed through a dry dual adsorption process. One adsorber will contain a material effective to adsorb ruthenium, such as ferric oxide or silica gel. The other adsorber will contain a material effective to adsorb iodine, such as a transition metal exchanged zeolite. Finally, the effluent gas is passed through a high efficiency, particulate, absolute filter to remove particles larger than 0.3 micron diameter, and then the remaining $CO_2$, $H_2O$, $N_2$, $O_2$ and minor amounts of contaminants are vented to the atmosphere.

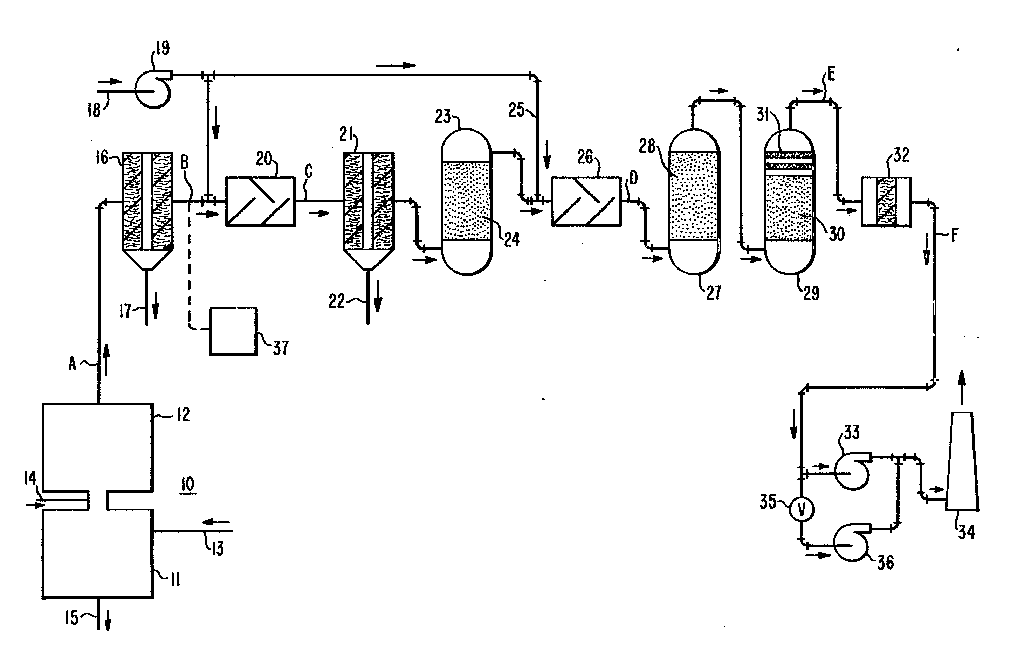

In order that the invention can be more clearly understood, a convenient embodiment thereof will now be described, by way of example, with reference to the accompanying drawing, which is a block diagram of an apparatus for use in the dry clean-up of radioactive waste incineration effluent gas.

Referring now to the drawing, a heating means 10 such as an incineration furnace with an afterburner is shown. The furnace preferably has a fixed-bed bottom heater, such as incinerator 11 and a top heater, such as afterburner 12. By "fixed-bed" heater or incinerator is meant a simple, batch, mass burning means effective to thermally decompose the waste in air. The thermal decomposition and combustion reaction will be finished in 1/2 hour to 2 hours, and then a new batch of waste may be added, providing a cyclical batch process. Waste feed plus oxidant such a air, all shown as stream 13, is supplied to the fixed bed incinerator 11. The waste feed can contain loaded ion exchange resin, plastic or rubber trash, or a mixture of both. In the block diagram drawing, for purposes of description, the feed will contain a mixture of loaded, spent ion-exchange resin and plastic or rubber trash.

The spent ion exchange resin can be any of those cation or anion types, or mixtures of these types, known in the art to remove cesium, strontium, iodine, ruthenium, and the like elements which may be found in nuclear power plant environments, such as in water circulated through a reactor and its associated components, or in reprocessing irradiated nuclear reactor fuel elements. One example of a useful ion exchange resin is a styrene based material, such as a polystyrene-divinylbenzene based type, containing from 6 wt.% to 10 wt.% sulfur and 2 wt.% to 4 wt.% nitrogen. Materials generally found with the spent ion exchange resins may include NaI, $CH_3I$, $RuO_4$, $RuO_2$, $Ru(SO_4)_2$, $Cs_2SO_4$, $Cs_2O$, CsO, CsCl, $CsNO_3$, $SrSO_4$, $SrCl_2$, $Sr(NO_3)_2$, SrO, and the like. The trash component of the waste feed 13 can contain, for example, cellulose, polyethylene, polystyrene rubbers, fluorine or chlorine halide such as polyvinyl chloride or polyvinyldifluoride, or all of their mixtures, which may be contaminated during the processing of fuels for nuclear reactors. The most troublesome materials are polyvinyl chloride, and spent ion-exchange resins loaded with iodine and ruthenium.

The incinerator 11 operates at a temperature of from 730°C (1350°F) to 875°C (1600°F) and is preferably of the fixed-bed type using air as oxidant, rather than a fluid-bed type. Here, the waste is thermally decomposed and partly oxidized over a short time period. The relatively high incineration temperature, i.e., over 730°C, in the fixed-bed design is necessary to completely split and thermally decompose the long chain cross-linked polymers present, having C-C, C-H, C-N and C-S bonds, to provide a low volume, dry ash component and a gaseous component. This high temperature will provide volatiles containing at least one of vaporized iodine and ruthenium if loaded ion exchange resins are incinerated, but such materials will be adsorbed by the packed column means utilized in this invention.

Use of thermal decomposition temperatures in incinerator 11 of over 875°C would result in excess ruthenium volatilization. Iodine volatilizes completely at even 200°C, but ruthenium volatilizes only about 20 wt.% at 875°C, which amount is capable of control by use of down stream adsorbers. Also, over 875°C, some of any strontium present may start to volatilize. 40 wt.% to 60 wt.% of cesium, at up to 875°C will remain as ash, with the rest being combusted and escaping with the flue gas as a vapor/particulate. Over 875°C, much more cesium will be released into the effluent gas. Use of temperatures up to 875°C in the incinerator 11 allows good combustion in the afterburner 12, which operates, at a temperature of over 875°C, preferably from 980°C (1800°F) to 1150°C (2100°F), with a 100% excess air feed 14. Low volume dry ash 15 is shown exiting the bottom of incinerator 11.

Assuming, a waste feed 13 of 200 pounds/hour (25 ft.$^3$/hr.) of trash, containing plastic, rubber and cellulose, with about 10 wt.% polyvinyl chloride, and 40 pounds/hour (0.8 ft.$^3$/hr.) of spent ion-exchange resin containing cesium, strontium, iodine and ruthenium, with about 8.4 wt.% sulfur and about 3 wt.% nitrogen; volatile off-gas exiting at point A in the drawing will contain $SO_2$, $NO_2$, and HCl, plus volatilized iodine and ruthenium, most likely in the form of NaI, $CH_3I$, and $RuO_4$. All the strontium and some of the cesium will exit with dry ash 15, with strontium most likely in the form of $SrSO_4$, $SrCl_2$, $Sr(NO_3)_2$ and SrO, and cesium most likely in the form of $Cs_2SO_4$ and $Cs_2O$. Some cesium will form vapor/particulates most likely in the form of CsO, CsCl and $CsNO_3$. The volume reduction of waste from feed waste to ash, over the entire process, will be over about 30 to 1 and generally would be from about 30 to 40 volumes to 1 volume.

The 200 pounds/hour of trash would have an average activity of about 0.02 curie/ft$^3$ and the 40 pounds/hour of loaded ion exchange resin would have an average activity of about 1 curie/ft$^3$ when added to the incinerator as stream 19. At point A in the drawing, the volatile effluent gas composition flow rate, temperature, and activity level would have the values shown in Table 1, which also includes such values for the feed stream 13:

0 254 538

The volatile effluent gas passes from point A into hot coarse filter 16. In 16 a filter made of a material such as silicon carbide/silicon graphite, recovers dry particulate ash 17. Here, about 99 wt.% of dry ash having a

TABLE 1

## Initial Feed 13

| Trash | Loaded Ion-Exchange Material |
|---|---|
| 200 lb./hr. | 40 lb./hr. |
| 25 ft./hr. | 0.8 ft./hr. |
| 10 wt.% polyvinyl | 8.4 wt.% sulfur |
| chloride | 3 wt.% nitrogen |
| cesium | cesium |
| strontium | strontium |
| iodine | iodine |
| ruthenium | ruthenium |

### Average Activity Level

| | |
|---|---|
| 0.02 curie/ft. | 1 curie/ft. |
| or | or |
| 0.705 microcurie/cm | 35.28 microcurie/cm |

## Hot Gas At Point A

| From Trash | From Loaded Ion Exchange Material |
|---|---|
| 8000 ft./min. | 1600 ft./min. |
| 980°C to 1095°C | 980°C to 1095°C |
| 1188 ppm HC1 | 1890 ppm SO |
| (ppm = parts per million) | 1450 ppm NO |

particulate ash
cesium vapor/particulates
iodine vapor
ruthenium vapor

### Average Activity Level

| | | | |
|---|---|---|---|
| Ru-103 | $6.6 \times 10$ | Ru-103 | $5.3 \times 10$ |
| Ru-106 | microcurie/cm | Ru-106 | microcurie/cm |
| I-129 | $3.68 \times 10$ | I-129 | $2.9 \times 10$ |
| I-131 | microcurie/cm | I-131 | microcurie/cm |
| I-125 | | I-125 | |
| Cs-137 | $3.676 \times 10$ | Cs-137 | $5.58 \times 10$ |
| Cs-134 | microcurie/cm | Cs-134 | microcurie/cm |

diameter of from 3 microns to 100 microns is removed from the off-gas stream. At point B in the drawing, about 8000 ft.³/min. of gas at 980°C to 1095°C exits hot gas filter. Optionally, cooling air 18 at about 16°C is fed via blower 19 at a rate of 2000 ft.³/min. to 2400 ft.³/min. into the hot gas stream near point B. The cooled gas stream is then fed into a cooling means, such as a vane mixer 20. The off-gas stream exits at point C in the drawing, and would have the composition, flow rate, temperature, and activity level shown in Table 2:

<div align="center">TABLE 2 AT C</div>

| For Trash Component | For Loaded Ion Exchange Resin Component |
|---|---|
| 10213 ft.³/min. | 2042 ft.³/min |
| 480°C | 480°C |
| 516 ppm HCl | 822 ppm $SO_2$ |
| | 630 ppm $NO_2$ |
| Fine particulate ash cesium vapor/particulates iodine vapor ruthenium vapor | |

| Average Activity Level | | Average Activity Level | |
|---|---|---|---|
| Ru | $5.1 \times 10^{-7}$ microcurie/cm³ | Ru | $4.2 \times 10^{-6}$ microcurie/cm³ |
| I | $2.8 \times 10^{-7}$ microcurie/cm³ | I | $2.3 \times 10^{-6}$ microcurie/cm³ |
| Cs | $2.87 \times 10^{-6}$ microcurie/cm³ | Cs | $4.58 \times 10^{-7}$ microcurie/cm³ |

The cooled effluent gas then enters intermediate filter 21. In 21 a filter made of a material such as sintered stainless steel, sintered nickel, sintered Monel metal, or the like, recovers additional dry, fine particulate ash 22. Here, about 99.9 wt.% of dry ash having a diameter of over about 1 micron is removed from the off-gas stream. A major part of any particulate cesium (Decontamination Factor of about 10) would be collected in this filter. 1100 ft.³/min. to 12000 ft.³/min of effluent gas at about 480°C exits the intermediate filter 21. The filtered effluent gas is then fed into dry neutralization bed 23, packed with a dry material 24 effective to neutralize, for example, HCl, $SO_2$ and $NO_2$ acid gases. Useful neutralization materials, include basic materials such as dry, granular, $Na_2CO_3$, $K_2CO_3$, $NaHCO_3$, $KHCO_3$, and the like. In the neutralization bed, the Decontamination Factor (D.F. = concentration of species at the inlet/concentration of species at the outlet) will increase to 10 for iodine since some acidic radioiodine will be tapped in the neutralization bed. This bed will also neutralize at least 90 vol.% of HCl and 50 vol.% of $SO_2$ $NO_2$ will be neutralized but will be desorbed because of decomposition of $NaNO_3$ at about 380°C. Upon exiting the neutralization bed 23, the neutralized effluent gas is optionally mixed with cooling air 18 at about 16°C, fed via blower 19 at a rate of 12000 ft.³/min. to 17000 ft.³/min. into the off-gas stream through line 25. The gas stream is then fed into a mixing/cooling means, such as vane mixer 26 to achieve uniform cooling. The effluent gas stream exits at point D in the drawing and would have the composition, flow rate, temperature, and activity level shown in Table 3:

## TABLE 3 AT D

| For Trash Component | For Loaded Ion Exchange Resin Component |
|---|---|
| 23570 ft.$^3$/min. | 4715 ft.$^3$/min |
| 121°C | 121°C |
| 12 ppm HCl | 93 ppm $SO_2$ |
| | 143 ppm $NO_2$ |

minimal fine ash and
cesium particulates
iodine vapor
ruthenium vapor

| Average Activity Level | | Average Activity Level | |
|---|---|---|---|
| Ru | $2.2 \times 10^{-7}$ microcurie/cm$^3$ | Ru | $1.8 \times 10^{-6}$ microcurie/cm$^3$ |
| I | $1.2 \times 10^{-8}$ microcurie/cm$^3$ | I | $1.0 \times 10^{-7}$ microcurie/cm$^3$ |
| Cs | $2.87 \times 10^{-7}$ microcurie/cm$^3$ | Cs | $4.58 \times 10^{-8}$ microcurie/cm$^3$ |

At this point any of the cesium vapor will condense to a particulate solid phase.

The completely cooled effluent gas then enters a dry, dual adsorption process means. Adsorption means 27 will contain a material 28 effective to adsorb ruthenium, such as, for example, collodial, amorphous, fumed silicon dioxide (silica gel), ferric oxide, cobalt oxide, nickel oxide, activated alumina, magnesium perchlorate, and the like. Adsorption means 29 will contain a material 30 effective to adsorb iodine, and residual ruthenium, such as, for example, transition metal-exchanged zeolites, such as manganese, cadmium, mercury, zinc or chromium-exchanged zeolites, and the like, with one or two, 2-inch to 8-inch thick beds of coconut charcoal or other active charcoal members 31. These two adsorption means may be packed columns and may be placed in any order after cooling means 26 as long as the off-gas passes through both of them. These dual adsorption means are also effective to remove fine cesium particulates. In adsorption means 27, the Decontamination Factor will increase to $10^3$ for ruthenium. In adsorption means 29, the Decontamination Factor will increase to $10^3$ for iodine and a total of $10^4$ for ruthenium. After dual adsorption the off-stream exits at point E in the drawing and would have the composition, flow rate, temperature, and activity level shown in Table 4:

## TABLE 4 AT E

| For Trash Component | For Loaded Ion Exchange Resin Component |
|---|---|
| 23570 ft.$^3$/min. | 4715 ft.$^3$/min |
| 121°C | 121°C |
| 12 ppm HCl | 93 ppm $SO_2$ |
| | 143 ppm $NO_2$ |
| | minimal fine ash |
| | minimal cesium particulates |
| | minimal iodine vapor |
| | minimal ruthenium vapor |

| Average Activity Level | | Average Activity Level | |
|---|---|---|---|
| Ru | $2.2 \times 10^{-11}$ microcurie/cm$^3$ | Ru | $1.8 \times 10^{-10}$ microcurie/cm$^3$ |
| I | $1.2 \times 10^{-11}$ microcurie/cm$^3$ | I | $1.0 \times 10^{-10}$ microcurie/cm$^3$ |
| Cs | $2.87 \times 10^{-7}$ microcurie/cm$^3$ | Cs | $4.58 \times 10^{-8}$ microcurie/cm$^3$ |

Finally the effluent gas is passed through high efficiency, particulate, absolute filter 32 to remove about 99.9 wt.% of particles having a diameter of over about 0.3 micron. This filter will produce a Decontamination Factor of at least $10^3$ for particulate cesium. The 23570 ft.$^3$/min. air plus gas from the trash component and the 4715 ft.$^3$/min. air plus gas from the loaded ion-exchange resin component, both at 121°C are passed by blower 33 to stack 34 and vented to the atmosphere as $CO_2$, $H_2O$, $N_2$, $O_2$ and minor amounts of contaminants. Optional valve 35 and blower 36 can be used as a back up blower system to be activated in case the stack exit exceeds federal, state or local statutory levels. The final discharge composition at F is shown in Table 5:

## TABLE 5 AT F

| For Trash Component | For Loaded Ion Exchange Resin Component |
|---|---|
| $23570 \text{ ft.}^3/\text{min.}$ | $4715 \text{ ft.}^3/\text{min}$ |
| $121°C$ | $121°C$ |
| 12 ppm HCl | 93 ppm $SO_2$ |
| | 143 ppm $NO_2$ |
| minimal fine ash | |
| minimal cesium particulates | |
| minimal iodine vapor | |
| minimal ruthenium vapor. | |

| Average Activity Level | | Average Activity Level | |
|---|---|---|---|
| Ru | $2.2 \times 10^{-11}$ microcurie/cm$^3$ | Ru | $1.8 \times 10^{-10}$ microcurie/cm$^3$ |
| I | $1.2 \times 10^{-11}$ microcurie/cm$^3$ | I | $1.0 \times 10^{-10}$ microcurie/cm$^3$ |
| Cs | $2.87 \times 10^{-10}$ microcurie/cm$^3$ | Cs | $4.58 \times 10^{-11}$ microcurie/cm$^3$ |

What is contemplated then, is an incinerator method having a volume reduction factor of as high as 40 to 1, with elimination of preheating, expensive fluid-bed incinerator apparatus, and wet scrubbing. The process can also be operated in conjunction with an optional heat recovery unit, such as a finned gas-liquid heat exchanger 37 installed between the afterburner 12 and neutralization means 23. This would allow operation of the off-gas system at smaller volume without losing any of its features and provide some fuel economy by preheating air necessary for combustion in heating means 10.

## Claims

1. A method for dry clean-up of waste material, characterized by:
    (A) supplying waste material containing at least one of halogen, S and N, to a fixed-bed heater;
    (B) heating the waste material in an oxidizing atmosphere at a temperature of from 730°C to 875°C, to thermally decompose the material and provide dry ash and gas;
    (C) combusting the gas to provide an effluent gas containing an acidic gas;
    (D) passing the effluent gas through dry alkaline material in a neutralization means, to neutralize the acidic gas; and
    (E) venting the neutralized effluent gas and collecting the dry ash.

2. A method according to claim 1, characterized in that the halogen is Cl, the acidic gas is at least one of HCl, $NO_2$ and $SO_2$, and the effluent gas is filtered and cooled between steps (C) and (D).

3. A method according to claim 1, characterized in that the effluent gas is cooled and filtered after step (D)

4. A method according to claim 1, 2 or 3, characterized in that the effluent gas, after step (C), also contains vapors of Ru, I and mixtures thereof and where, after step (D), the effluent gas is passed through at least one adsorber means which is effective to adsorb Ru and I.

5. A process according to claim 4, characterized in that after passage through the at least one adsorber means, the effluent gas is passed through a filter means.

6. A process according to claim 4 or 5, characterized in that the neutralized effluent gas is cooled before passage through the at least one adsorber means.

7. A process according to claim 4, 5 or 6, characterized in that the adsorber means consists of one effective to adsorb Ru and one effective to adsorb I.

8. A method of according to claim 1, 2, 3 or 4, characterized in that no liquid neutralization product is produced, a heat recovery step is used between steps (C) and (D), and volume reduction from waste material to ash is greater than 30 to 1.

9. A process according to any of claims 2 to 8, characterized in that the waste material contains at least one of polyvinyl chloride and an ion-exchange material containing at least one of S, N, Ru, I and Cs and is supplied to a fixed-bed heater which is a first stage incinerator where said material is heated in air, the resulting gas being passed to a second stage heater operating at 980° to 1150°C to combust the gas and provide effluent gas containing acidic gas as well as vapors of at least one of Ru, I and Cs and particulate ash.

10. A process according to claim 9, characterized in that the particulate ash contains Cs and the filtration is effective to trap Cs-containing particulates.

0254538

# EUROPEAN SEARCH REPORT

**European Patent Office**

Application number

EP 87 30 6449

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 107 889  (C.E.A.) <br> * Claim  1; page 5, line 4; page 6, line 26 * | 1,3,5 | G 21 F    9/32 |
| Y | EP-A-0 102 155  (ATOMIC ENERGY OF CANADA) <br> * Claim 1; page 4,  lines  28-33; page 3, lines 27-30 * | 1,5,8,9 | |
| A | FR-A-1 406 059  (C.E.A.) <br> * Abstract, points 1,3 * | 1 | |
| A | DE-A-3 224 054  (KIENER PYROLYSE) <br> * Claims 1,7 * | 1 | |
| | ----- | | **TECHNICAL FIELDS SEARCHED (Int. Cl.4)** <br><br> G 21 F |

The present search report has been drawn up for all claims

| Place of search | Date of completion of the search | Examiner |
|---|---|---|
| THE HAGUE | 12-09-1987 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82